# EUROPEAN PATENT SPECIFICATION

(11) **EP 2 376 337 B1**
(45) Date of publication and mention of the grant of the patent: **06.08.2014**
(21) Application number: 09833726.4
(22) Date of filing: 14.12.2009
(51) Int. Cl.: B65D 75/00, B29C 65/76, B31B 29/60, B65B 43/26, B65B 61/06

(54) **CONTAINER AS WELL AS DEVICE AND METHOD FOR ASEPTIC FILLING OF THE CONTAINER**
BEHÄLTER SOWIE VORRICHTUNG UND VERFAHREN ZUM ASEPTISCHEN FÜLLEN DES BEHÄLTERS
RECIPIENT, ET DISPOSITIF ET PROCEDE POUR REMPLISSAGE ASEPTIQUE DUDIT RECIPIENT

(30) Priority: 19.12.2008 SE 0802619
(43) Date of publication of application: 19.10.2011
(73) Proprietor: Ecolean AB, 251 08 Helsingborg (SE)
(72) Inventor: MELLBIN, Paul, 252 85 Helsingborg (SE)
(74) Representative: Åkesson, Sten Jan-Åke
(86) International application number: PCT/SE2009/051411
(87) International publication number: WO 2010/071562

(56) References cited:
- EP-A1- 1 905 696
- EP-A2- 1 595 796
- EP-B1- 1 064 203
- WO-A1-2004/037673
- CA-A1- 1 010 832
- FR-A- 1 128 387
- GB-A- 1 290 422
- US-A1- 2003 179 957
- US-A1- 2007 242 905

## Description

### Technical Field

The present invention relates to a container and a method for filling a container. The container has a closed compartment defined by flexible walls, which walls comprise two opposite side walls and a bottom wall which is folded to a double-wall shape.

### Background Art

Containers of the type described by way of introduction are also called collapsible containers and the use of such containers is becoming more widespread within the packaging industry, especially within the food industry. Examples of such containers are known from e.g. US2007/0242905A1 and FR 1 128 387.

In the food industry, this container type has been utilized primarily for pasteurized products.

The container type is advantageous in that it can be manufactured at a low cost and that the detrimental ecological burden of the container is relatively small.

Currently, there is a need to be able to use said container type also for food products that are packed in an ultra-hygienic or aseptic manner.

The container type is known *inter alia* from EP 1,064,203, which discloses a container which is sealed in its non-filled state. This enables sterilization of the container compartment during manufacture of the container and distribution of the container to a filling plant with maintained sterility. In this way, hygienic filling of the container is made possible. However, hygienic filling is not the same as ultra-hygienic or aseptic filling, and EP 1,064,203 addresses the problems associated with ultra-hygienic or aseptic filling to a very limited degree only.

There is therefore a need for a container of the collapsible type, which is adapted for aseptic or ultra-hygienic filling.

There is also a need for a system for aseptic or ultra-hygienic filling of containers of the collapsible type.

### Summary of the Invention

In view of the above, it is an object of the present invention to provide a container which is particularly suitable for ultra-hygienic or aseptic filling.

Yet another object is to make available a method that is particularly suitable for aseptic or ultra-hygienic filling of said container.

To achieve at least one of the above objects and further non-stated objects, which will be evident from the following description, the present invention concerns a container according to claim 1, as well as a method for ultra-hygienic or aseptic filling of said container according to claim 7. Embodiments of the container are set out in claims 2-6. Embodiments of the method are set out in claims 7-10.

According to a first aspect, the invention concerns a container for a liquid product, which container has a closed compartment defined by flexible walls, which walls comprise two opposite side walls and a bottom wall which is folded to a double-wall shape. The container is characterised in that the bottom wall has an outer edge portion with mutually abutting sections, which are joined together for defining a closed bottom pocket.

A container is thus obtained which enables simple and effective sterilization. A sterile container is essential in ultra-hygienic or aseptic filling. The closed compartment enables the inside of the container to be made sterile already in the manufacturing process or in conjunction with said manufacturing process. This means that it is possible to distribute a container having a sterile compartment which is to be filled with a product to a filling plant, such as a dairy, where the filling is effected. Manufacture of the container can occur under sterile conditions, thus allowing a container having a sterile compartment to be obtained. It is also possible to sterilize the closed compartment after the manufacture as such. Such sterilization after manufacture can be achieved, for example, by means of electron irradiation. The outside of the container can be sterilized in sterilizing equipment provided in a filling device of the filling plant. Said sterilizing equipment can be adapted to spray a sterilizing agent, such as hydrogen peroxide or ozone, onto the outside of the container, or to expose the outside of the container to UV light. A problem with containers which have a closed compartment defined by flexible walls, which walls comprise two opposite side walls and a bottom wall which is folded to a double-wall shape, is the fact that it is difficult to sterilize the area associated with the bottom wall which is folded to a double-wall shape. It is difficult to sterilize this particular area by spraying with sterilizing agent or by irradiating with UV light. With the inventive container, whose bottom wall has an outer edge portion with mutually abutting sections which are joined together for defining a closed bottom pocket, the area described above can be sterilized in an easy and effective manner. Such easy and effective sterilization is possible because of the closed bottom pocket. The closed bottom pocket can be easily and effectively sterilized in the same way as the closed compartment. If the container is manufactured under sterile conditions, the bottom pocket is made sterile already in the process of manufacturing the container. Alternatively, the bottom pocket can be sterilized after manufacture, for example by means of electron irradiation. This electron irradiation can be effected in a step where the container compartment is exposed to electron irradiation. Because the bottom pocket is closed the container can be distributed with maintained sterility of the bottom pocket.

Said mutually abutting sections can be joined together by a joint which is achieved by cold sealing, heat sealing or gluing.

By cold sealing is meant a joining procedure which occurs at a temperature that is significantly lower than the melting temperature of the container material. In cold sealing a pressure is applied over the edge portion in order to force the mutually abutting sections against each other for creating molecular bonds which cause the sections to adhere to one another.

Said mutually abutting sections can be joined together by a joint which is breakable by filling the container. In this way, a container which in its filled state has a completely unfolded bottom is obtained, which container can be arranged in a standing position.

Said joint can be gas-tight. This ensures that a sterilized bottom pocket of a container remains sterile until the joint is broken.

A device for filling the containers described above under aseptic or ultra-hygienic conditions comprises a sterilizing unit with sterilizing equipment for external sterilization of said containers, a sterile chamber for receiving the containers which have been externally sterilized in the sterilizing unit and comprising equipment for opening, filling and sealing the containers as well as a discharge lock chamber for receiving the containers which have been opened, filled and sealed in the sterile chamber and comprising equipment for discharging the containers. The sterile chamber comprises a cutting tool, which is arranged, during feeding of the containers when being in an interconnected state in which they form an elongate web of containers, to open a filling duct of each container. The sterile chamber comprises separating means for separating the interconnected containers from each other in a non-filled state of said containers.

A device is thus provided which enables easy and effective filling of containers of the above-stated type under aseptic or ultra-hygienic conditions. The sterile chamber and the sterilizing equipment for external sterilization of the containers together enable filling under aseptic or ultra-hygienic conditions. The sterilizing unit, the sterile chamber and the discharge lock chamber are in communication with each other. The sterile chamber receives containers from the sterilizing unit and conveys them to the discharge lock chamber. This dividing-up minimizes the risk of contamination.

The device can further comprise air supply means for applying an excess pressure in the sterile chamber by supplying sterile air. Said air supply means can be connected to the sterile chamber. As a result, sterile air can be supplied directly to the sterile chamber for applying an excess pressure therein. By virtue of the fact that the sterilizing unit and the discharge lock chamber are in communication with the sterile chamber, the sterile air will eventually be conveyed to the same, thus preventing the surrounding air from penetrating into the device since an excess pressure has been created.

The sterilizing equipment for external sterilization of the containers can comprise nozzles for spraying a sterilizing agent onto the outsides of the containers. The sterilizing agent can be hydrogen peroxide or ozone. The use of a sterilizing agent enables easy and effective sterilizing of the outsides of the containers.

The sterilizing equipment for external sterilization of the containers can comprise lamps which are adapted to expose the outsides of the containers to UV light. This is another example of easy and effective sterilization of the outsides of the containers.

The sterile chamber can comprise a moving means for moving, in a stepwise manner, containers to a filling station for filling the containers via opened filling ducts thereof and to a sealing station for sealing the filling ducts of the filled containers, the moving means being adapted to move the containers in a transverse direction relative to a direction of orientation of said containers.

The equipment for discharging the containers comprises transport means for transporting said containers in a direction parallel to a direction of orientation of the containers.

According to a further aspect, the invention concerns a method for filling a container having a closed compartment defined by flexible walls, which walls comprise two opposite side walls and a bottom wall which is folded to a double-wall shape. The method comprises the steps of (a) joining together mutually abutting sections of an outer edge portion of said bottom wall for providing a closed bottom pocket; (b) sterilizing the compartment; (c) sterilizing said bottom pocket; (d) externally sterilizing the container; (e) opening a filling duct of the container for establishing a communication between the compartment of the container and the surroundings; (f) filling the container via said filling duct; and (g) sealing the filling duct of the filled container.

A method is thus provided which enables simple and effective sterilization of a container of the above-stated type. By sterilizing the compartment and the formed bottom pocket a container that is sterile on the inside is obtained. The provision of the closed bottom pocket and the sterilizing of the same and of the compartment enable a container having a closed compartment defined by flexible walls, which walls comprise two opposite side walls and a bottom wall which is folded to a double-wall shape, to be filled in a simple manner under sterile conditions. In a filling device it is easy to sterilize the outsides of said side walls, for example by spraying with sterilizing agent or irradiating with UV light. Since the compartment and the formed bottom pocked have been sterilized at an earlier stage, the whole container is sterile at this point and the filling of a product can be effected in an aseptic manner.

The mutually abutting sections can be joined together by a joint which is designed to break upon filling of the container. In this way, a container which in its filled state has a completely unfolded bottom is obtained, which container can be arranged in a standing position.

Steps (a)-(c) can be carried out separately from steps (d)-(f). Steps (a)-(c) can be performed, for example, in a central manufacturing facility. Steps (d)-(f) can be performed, for example, in a filling plant, such as a dairy, to which the centrally manufactured containers, whose interior has been sterilized, are distributed.

Steps (d)-(g) can be performed in a sterile environment.

### Brief Description of the Drawings

Embodiments of the present invention will be described below by way of example and with reference to the accompanying drawings.
Fig. 1 is a schematic view illustrating the forming of a container according to the present invention.
Fig. 2 shows an unfilled container according to the invention.
Fig. 3 is a plan view of a bottom wall of a container according to the invention.
Fig. 4 shows a filled container according to the invention.
Figure 5 shows a device for aseptic or ultra-hygienic filling of a container.
Figure 6 is a flowchart for a method for aseptic or ultra-hygienic filling of a container according to the invention.

### Description of Embodiments

Embodiments of a container according to the invention will be described below. Furthermore, embodiments of a method for aseptic or ultra-hygienic filling of container according to the invention will be described.

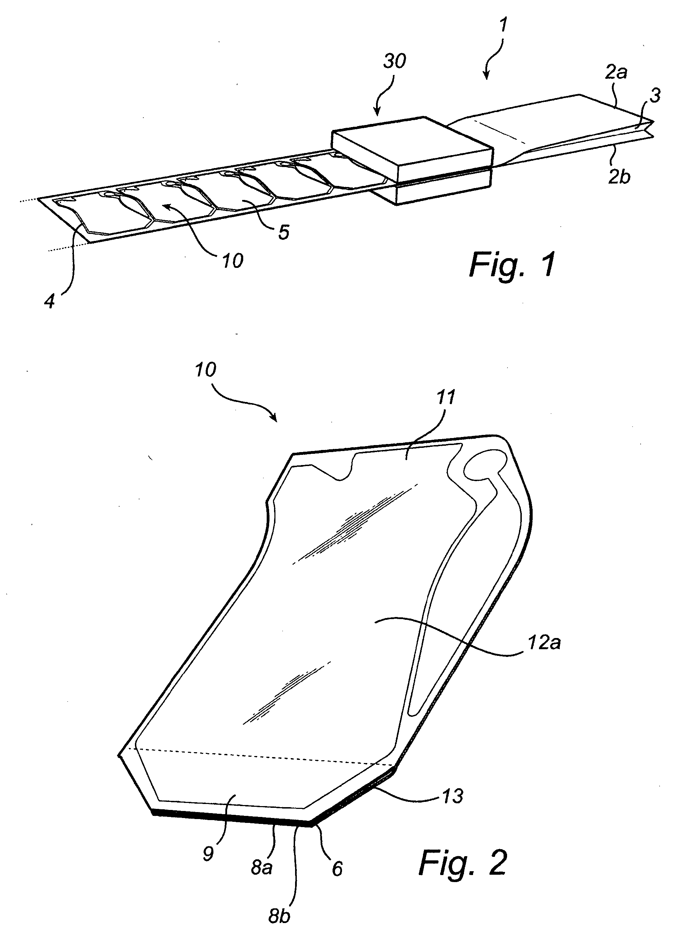

Figure 1 shows a container web 1 folded into M-shape and comprising two opposite side-wall-forming portions 2a, 2b and a folded bottom-wall-forming portion 3 arranged between said portions. The container web 1 is preferably produced from a flexible, laminated packaging material. The packaging material can comprise a core layer of a polyolefin material. The core layer can further comprise a filler mineral material, which can advantageously be constituted by chalk (calcium carbonate).

To form a container 10 the two side-wall-forming portions 2a, 2b and the bottom-wall-forming portion 3 are brought together in a tool 30. The tool 30 joins together the portions 2a, 2b, 3 along a connecting portion 4 for defining a compartment 5. The tool 30 can join together the portions for example by means of heat, pressure, ultrasound or a combination thereof. The finished container 10 has a hermetic compartment 5.

The finished containers 10 are interconnected. In this way, an elongate web of containers 10 is formed. The elongate web of containers 10 can then be rolled up on a bobbin for forming a roll with a web of interconnected, empty containers 10. The roll can then be distributed to a filling plant for use in a filling machine.

Figure 2 illustrates a container 10 of the above-stated type. The container 10 comprises two opposite side walls 12a, 12b and a bottom wall 13 which is folded to a double-wall shape.

The side walls 12a, 12b of the container together define a filling duct 11, which is closed in the illustrated non-filled state of the container. By opening the filling duct 11, a communication between the compartment 5 of the container 10 and the surroundings is established, which enables filling of the container. The filling duct 11 is adapted to be reclosed after filling, for example by heat sealing.

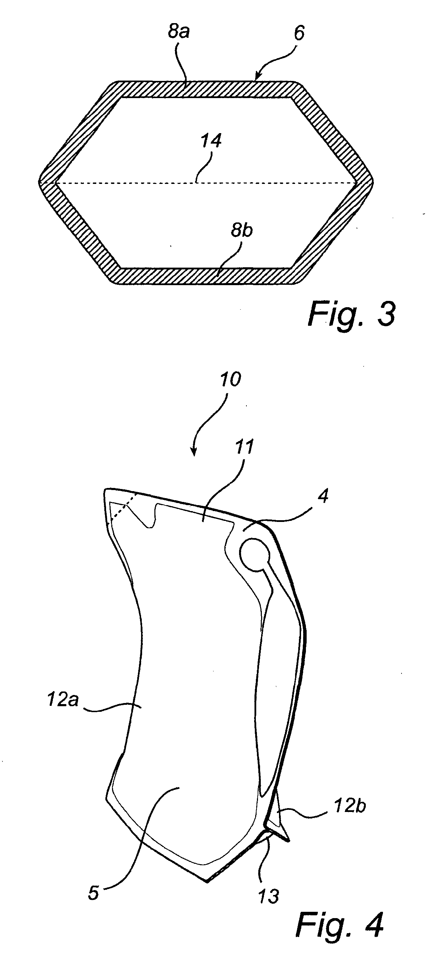

The bottom wall 13 has an outer edge portion 6 with mutually abutting sections 8a, 8b, which outer edge portion 6 is thus located on that side of the bottom wall 13 that faces away from the compartment 5. The sections 8a, 8b are shown more clearly in Figure 3, to which reference is now also made. Figure 3 shows the bottom wall 13 in the unfolded state. For the bottom wall 13 to be able to assume this state the bottom wall 13 which is folded to a double-wall shape and its outer edge portion 6 with its mutually abutting sections 8a, 8b must be folded about the folding line 14.

The mutually abutting sections 8a, 8b of the edge portion 6 are connected to each other for defining a closed bottom pocket 9.

Said interconnection of the mutually abutting sections 8a, 8b can be achieved by means of the tool 30. It will be appreciated, however, that said interconnection of the mutually abutting sections 8a, 8b can also be achieved by means of another, non-illustrated, tool.

Said interconnection of the mutually abutting sections 8a, 8b can be achieved, for example, by cold sealing, heat sealing or gluing.

By cold sealing is meant a joining procedure which occurs at a temperature that is significantly lower than the melting temperature of the container material. In cold sealing, a pressure is applied over the edge portion 6 in order to force the mutually abutting sections 8a, 8b against each other for creating molecular bonds which cause the sections 8a, 8b to adhere to one another.

In the embodiment shown, the sections 8a, 8b of the edge portion 6 are joined together by a joint which is breakable by filling the container 10. This means that the bottom wall 13 which is folded to a double-wall shape will be knocked open during filling of the container 10, thereby forming the bottom of a filled container 10 that stands by itself. Figure 4 illustrates such a filled container 10.

According to the present invention, the compartment 5 of the container 10 is sterilized in conjunction with the manufacture of the container 10. Also the bottom pocket 9 of the container can be sterilized in conjunction with the manufacture of the container 10.

In the case where the bottom pocket 9 of the container 10 is sterilized during manufacture of the container 10, the sections 8a, 8b of the edge portion 6 of the bottom wall 13 should be joined together by a gas-tight joint to ensure that the sterility can be maintained.

Containers 10 which are sterilized in this manner can be provided by producing them from a sterilised packaging material under sterile conditions. Alternatively, the packaging material can be sterilized during the production process.

However, it is preferable for the containers 10 to be sterilized after the production thereof.

Such sterilization can be effected, for example, by means of electron irradiation. The sterilization, which is effected for example by means of electron irradiation, of the compartment 5 and, where appropriate, also of the bottom pocket 9 can occur before the web of containers 10 has been rolled up on a bobbin. Alternatively, the sterilization can occur after the web of containers 10 has been rolled up on a bobbin.

The sterilization of the compartment 5 and the bottom pocket 9 can occur simultaneously or in separate steps.

The type of container 10 described above is intended to be manufactured in one location and then to be distributed, with maintained sterility, to a filling plant, such as a dairy or the like, where the container 10 is subsequently filled with contents.

The inventive container 10 is intended for use in an aseptic or ultra-hygienic filling method according to the invention.

According to the inventive filling method, the inventive container is introduced in a filling machine. As mentioned previously, the containers can be provided in the form of a web rolled up on a bobbin.

The containers 10, which thus have sterile compartments 5 and, where applicable, also sterile bottom pockets 9, are subjected initially to a process of external sterilization. The sterilization process can be provided, for example, by exposing the outsides of the containers to hydrogen peroxide, ozone, UV light or a combination thereof. Hydrogen peroxide exposure can be achieved by immersing the containers in a peroxide bath or by means of spraying.

When the container 10 has been subjected to the external sterilization its filling duct 11 is opened. This can be achieved by moving the web of containers along a linear path, wherein a cutting tool 52 engages with the web for cutting off a top strip, thus opening the filling ducts 11 of the containers 10. The cutting tool 52 can comprise a rotatable knife, which forms, together with an anvil disk, a cutting jaw.

The container 10 is then filled by introducing a liquid product in the container 10 via the opened filling duct 11.

During filling of the container 10, its bottom wall 13 will be knocked open. In the case where the bottom pocket 9 has been sterilized during the manufacture of the container 10, the fact that the bottom wall 13 is knocked open will not lead to a risk of contamination. The bottom wall 13 is knocked open because the sections 8a, 8b of its edge portion 6 have been joined together by a joint which is designed to break upon filling of the container 10. More specifically, the joint breaks when the contents, due to gravitation or where applicable pressure, is introduced in the compartment 5 of the container 10 where it hits the bottom portion of the container 10.

Even if the bottom pocket 9 has not been sterilized, sealing of the bottom pocket 9 during the manufacture of the container 10 substantially reduces the risk of contamination.

When the filling has been completed the filling duct 11 is reclosed using any appropriate closing procedure.

The step of externally sterilizing, opening, filling and reclosing the container 10 is performed according to an embodiment of the present invention in a sterile or ultra-hygienic environment.

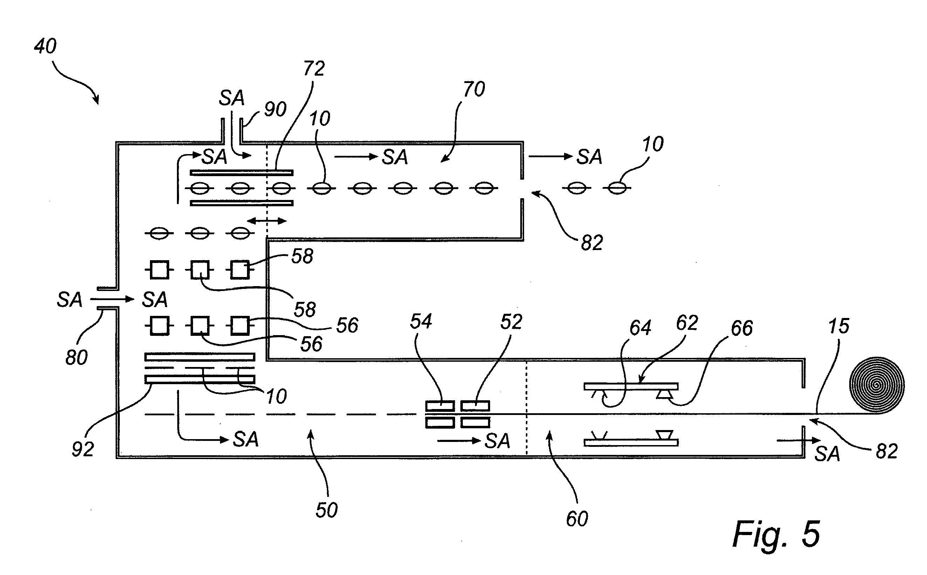

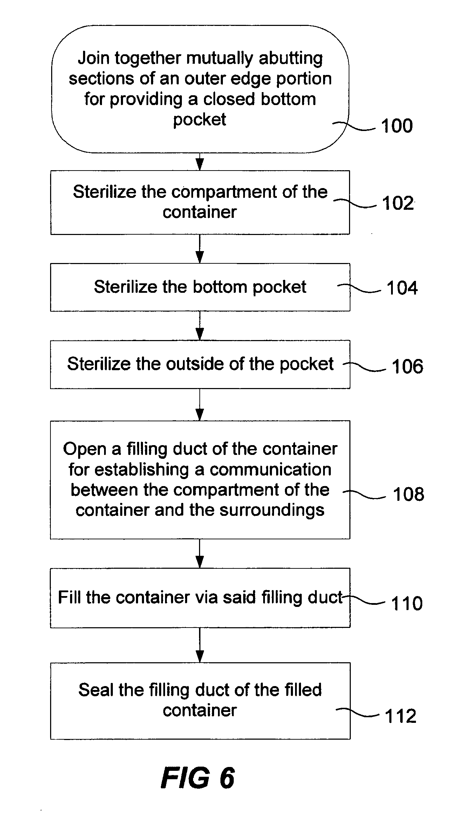

Figures 5 and 6, to which reference is now made, illustrate a device 40 and the corresponding method for aseptic or ultra-hygienic filling of containers 10 of the above-stated type.

Figure 5 illustrates schematically the device 40, which comprises a sterile chamber 50, a sterilizing unit 60 and a discharge lock chamber 70. The sterile chamber 50 is in communication with both the sterilizing unit 60 and the discharge lock chamber 70.

The sterilizing unit 60 comprises sterilizing equipment 62 for external sterilization of said containers 10.

The sterile chamber 50 comprises equipment for opening, separating, filling and sealing the containers 10.

The discharge lock chamber 70 comprises equipment for discharging the containers 10.

The device 40 further comprises a moving means (not shown), which is arranged for transport of the containers 10.

The moving means can be adapted, as in the shown embodiment, to receive containers 10 which are supplied in the form of a web 15 of interconnected containers 10 rolled up on a bobbin.

The containers 10 have a direction of orientation which coincides with the longitudinal direction of the rolled-out web 15.

The moving means is adapted to transport the containers 10 through the sterilizing unit 60 in a direction parallel to said direction of orientation.

The moving means is further adapted to transport the containers 10 through the sterile chamber 50, initially in a direction that coincides with said direction of orientation. During this initial transport opening and separation of the containers 10 is effected. By opening a container is here meant that an end seal of the filling duct is removed so that the compartment of the container is in communication with the surroundings via said filling duct.

The moving means is arranged to subsequently transport the opened and separated containers 10 in a transverse direction relative to said direction of orientation, while maintaining the direction of orientation of the containers 10. During said transport, filling and subsequently sealing of the opened and separated containers 10 are effected.

The moving means consists, in the discharge lock chamber 70, of said equipment for discharging the containers 10. This equipment is adapted to transport the containers 10 in a direction parallel to said direction of orientation while maintaining the direction of orientation of the containers 10.

The device 40 further comprises air supply means 80 for applying an excess pressure in the sterile chamber 50 by supplying sterile air SA. According to a non-limiting example, the sterile air SA can have a flow rate of 400 to 800 m³/h.

Said air supply means 80 can be connected directly to the sterile chamber 50. By virtue of the fact that the sterile chamber 50 is in communication with the sterilizing unit 60 and the discharge lock chamber 70, the sterile air SA will flow through them and escape via air evacuation means 82 in the sterilizing unit 60 and the discharge lock chamber 70, respectively. It should be noted that the sterile air SA can also escape via other, non-illustrated, air evacuation means.

The equipment for discharging the containers 10 provided in the discharge lock chamber 70 can comprise a transport means 72, which moves between the sterile chamber 50 and the discharge lock chamber 70 to collect the filled and sealed containers 10 in the sterile chamber 50 for further discharging thereof via the discharge lock chamber 70. The flow of sterile air SA into the discharge lock chamber 70 should be such as to ensure that air will not flow into the sterile chamber 50 when the transport means 72 is moving between the discharge lock chamber 70 and the sterile chamber 50. Problems may occur in particular when the transport means 72 is moving from the sterile chamber 50 to the discharge lock chamber 70. If the transport means 72 moves at a speed that is higher than the flow velocity of the sterile air SA from the sterile chamber 50 to the discharge lock chamber 70, suction can be generated which may suck potentially dirty air into the sterile chamber 50.

An additional air supply means 90 can be arranged for supplying additional sterile air SA. The additional air supply means 90 can be connected, as in the shown embodiment, to the sterile chamber 50 adjacent the discharge lock chamber 70. This helps to ensure that there is always a substantial excess pressure which forces sterile air SA from the sterile chamber 50 to the discharge lock chamber 70.

The sterilizing equipment 62 provided in said sterilizing unit 60 for external sterilization of the containers 10 can comprise nozzles 64 for spraying a sterilizing agent onto the outsides of the containers 10. Examples of sterilizing agents are hydrogen peroxide or ozone. Alternatively, the sterilizing equipment 62 provided in said sterilizing unit 60 for external sterilization of the containers 10 can comprise lamps 66 which are adapted to expose the outsides of the containers 10 to UV light. Moreover, the sterilizing equipment 62 provided in said sterilizing unit 60 for external sterilizing of the containers 10 can comprise lamps 66 for exposing the outsides of the containers to UV light as well as nozzles 64 for spraying a sterilizing agent onto the outsides of the containers 10.

The equipment for opening the containers 10 in the sterile chamber 50 comprises a cutting tool 52, which is arranged, during feeding of the containers 10 when being in an interconnected state in which they form an elongate web of containers 10, to open the filling duct 11 of each container 10 by cutting off a top strip.

The sterile chamber 50 further comprises a separating means 54 for separating the interconnected containers 10 from each other. The separation of the interconnected containers 10 occurs when the containers 10 are in a non-filled state.

The separated containers 10 are then filled and sealed after filling.

The moving means can be arranged for stepwise transport of containers 10.

In the sterile chamber 50, the moving means can thus comprise a moving member, which is illustrated schematically at 92 and which is arranged for stepwise transport of the container 10, with maintained direction of orientation, in said transverse direction. The moving member 92 can be arranged for parallel transport of a plurality of containers in each step, and in the shown embodiment the moving member is arranged for stepwise handling of containers 10 in groups of three.

Accordingly, the containers 10 can be moved in a stepwise manner to a filling station 56 for filling the containers 10 via the opened filling ducts 11 of the containers 10. Moreover, the filled containers 10 can be moved in a stepwise manner to the sealing station 58 for sealing the filling ducts 11 of the filled containers 10.

The moving member 92 can also be arranged for further stepwise transport of the containers 10 to subsequent stations, such as a gas filling station (not shown) for filling a handle portion of each container with gas and to a subsequent gas sealing station (not shown) at which the gas-filled handle portions are sealed.

The equipment provided in the discharge lock chamber 70 for discharging the containers 10 comprises, as mentioned above, transport means 72, which are adapted to transport said containers 10, with maintained direction of orientation, in a direction parallel to said direction of orientation.

This enables a container 10 having a closed compartment 5 defined by flexible walls, which walls comprise two opposite side walls 12a, 12b and a bottom wall 13 which is folded to a double-wall shape, to be filled under aseptic or ultra-hygienic conditions by performing the following steps, which are illustrated in Figure 6.

Joining together the mutually abutting sections 8 of an outer edge portion 6 of said bottom wall 13 for providing a closed bottom pocket 9, step 100. The mutually abutting sections 8 are joined together by a joint which is designed to break upon filling of the container 10.

Sterilizing the compartment 5, step 102.

Sterilizing said bottom pocket 9, step 104.

Sterilizing the outside of the container, step 106.

Opening a filling duct 11 of the container 10 for establishing a communication between the compartment 5 of the container 10 and the surroundings, step 108.

Filling the container 10 via said filling duct 11, step 110.

Sealing the filling duct 11 of the filled container 10, step 112.

Steps 100, 102 and 104 can be performed separately from steps 106, 108, 110 and 112. Steps 106, 108, 110 and 112 should be performed in a sterile environment.

It will be appreciated that the present invention is not limited to the shown embodiments, but various variations and modifications are conceivable which fall within the scope of the present invention, which scope is thus defined solely by the appended claims.

## Claims

1. A container for a liquid product, which container has a closed compartment (5) defined by flexible walls,
which walls comprise two opposite side walls (12a, 12b) and a bottom wall (13) which is folded to a double-wall shape,
**characterised in that**
the bottom wall (13) has an outer edge portion (6) with mutually abutting sections (8a, 8b) which are joined together, whereby the bottom wall (13) defines a closed bottom pocket (9).

2. A container as claimed in claim 1, wherein said bottom pocket (9) is sterilie.

3. A container as claimed in claim 1 or 2, wherein said compartment (5) is sterilie.

4. A container as claimed in any one of claims 1-3, wherein said mutually abutting sections (8a, 8b) are joined together by a joint which is breakable by filling the container.

5. A container as claimed in any one of the preceding claims, wherein said mutually abutting sections (8a, 8b) are joined together by a joint which is provided by cold sealing, heat sealing or gluing.

6. A container as claimed in any one of claims 4-5, wherein said joint is gas-tight.

7. A method for filling a container (10) having a closed compartment (5) defined by flexible walls, which walls comprise two opposite side walls (12a, 12b) and a bottom wall (13) which is folded to a double-wall shape, comprising the steps of
(a) joining together mutually abutting sections (8a, 8b) of an outer edge portion (6) of said bottom wall (13) for providing a closed bottom pocket (9),
(b) sterilizing the compartment (5),
(c) sterilizing said bottom pocket (9),
(d) externally sterilizing the container (10),
(e) opening a filling duct (11) of the container (10) for establishing a communication between the compartment (5) of the container (10) and the surroundings,
(f) filling the container (10) via said filling duct (11), and
(g) sealing the filling duct (11) of the filled container (10).

8. A method as claimed in claim 14, wherein the mutually abutting sections (8a, 8b) are joined together by a joint which is designed to break upon filling of the container (10).

9. A method as claimed in claim 14 or 15, wherein steps (a)-(c) are carried out separately from steps (d)-(g).

10. A method as claimed in any one of claims 14-16, wherein steps (d)-(g) are performed in a sterile environment.

## Patentansprüche

1. Behälter für ein flüssiges Produkt, wobei der Behälter eine geschlossene Kammer (5) aufweist, die durch flexible Wände definiert ist,
wobei die Wände zwei gegenüberliegende Seitenwände (12a, 12b) und eine untere Wand (13), die zu einem doppelwandigen Gebilde gefaltet ist, umfassen,
**dadurch gekennzeichnet, dass**
die untere Wand (13) einen Außenrandabschnitt (6) mit aneinander anstoßenden Abschnitten (8a, 8b), die miteinander verbunden sind, aufweist, wobei die untere Wand (13) eine geschlossene untere Tasche (9) definiert.

2. Behälter nach Anspruch 1, wobei die untere Tasche (9) steril ist.

3. Behälter nach Anspruch 1 oder 2, wobei die Kammer (5) steril ist.

4. Behälter nach einem beliebigen der Ansprüche 1 - 3, wobei die aneinander anstoßenden Abschnitte (8a, 8b) durch eine Verbindung miteinander verbunden sind, welche durch Befüllen des Behälters aufbrechbar ist.

5. Behälter nach einem beliebigen der vorhergehenden Ansprüche, wobei die aneinander anstoßenden Abschnitte (8a, 8b) durch eine Verbindung miteinander verbunden sind, welche durch Kaltsiegeln, Heißsiegeln oder Kleben vorgesehen wird.

6. Behälter nach einem beliebigen der Ansprüche 4 - 5, wobei die Verbindung gasdicht ist.

7. Verfahren zum Befüllen eines Behälters (10) mit einer geschlossenen Kammer (5), die durch flexible Wände definiert ist, wobei die Wände zwei gegenüberliegende Seitenwände (12a, 12b) und eine untere Wand (13), die zu einem doppelwandigen Gebilde gefaltet ist, umfassen, umfassend folgende Schritte:
(a) Verbinden aneinander anstoßender Abschnitte (8a, 8b) eines Außenrandabschnitts (6) der unteren Wand (13) miteinander zum Vorsehen einer geschlossenen unteren Tasche (9),
(b) Sterilisieren der Kammer (5),
(c) Sterilisieren der unteren Tasche (9),
(d) äußeres Sterilisieren des Behälters (10),
(e) Öffnen eines Füllkanals (11) des Behälters (10) zum Herstellen einer Kommunikation zwischen der Kammer (5) des Behälters (10) und der Umgebung,
(f) Befüllen des Behälters (10) über den Füllkanal (11) und
(g) Verschließen des Füllkanals (11) des befüllten Behälters (10).

8. Verfahren nach Anspruch 14, wobei die aneinander anstoßenden Abschnitte (8a, 8b) durch eine Verbindung miteinander verbunden werden, die dazu ausgestaltet ist, beim Befüllen des Behälters (10) zu brechen.

9. Verfahren nach Anspruch 14 oder 15, wobei die Schritte (a) - (c) getrennt von den Schritten (d) - (g) durchgeführt werden.

10. Verfahren nach einem beliebigen der Ansprüche 14 - 16, wobei die Schritte (d) - (g) in einer sterilen Umgebung durchgeführt werden.

## Revendications

1. Conteneur pour un produit liquide, ledit conteneur possédant un compartiment fermé (5) défini par des parois souples,
lesdites parois comprenant deux parois latérales opposées (12a, 12b) et une paroi inférieure (13) pliée en une forme à double paroi,
**caractérisé en ce que**
la paroi inférieure (13) possède une partie de bord extérieur (6) avec des sections butant l'une contre l'autre (8a, 8b) reliées entre elles, la paroi inférieure (13) définissant une poche de fond fermée (9).

2. Conteneur selon la revendication 1, dans lequel ladite poche de fond (9) est stérile.

3. Conteneur selon la revendication 1 ou 2, dans lequel ledit compartiment (5) est stérile.

4. Conteneur selon l'une quelconque des revendications 1 - 3, dans lequel lesdites sections butant l'une contre l'autre (8a, 8b) sont reliées entre elles par un joint apte à être rompu lors du remplissage du conteneur.

5. Conteneur selon l'une quelconque des revendications précédentes, dans lequel lesdites sections butant l'une contre l'autre (8a, 8b) sont reliées entre elles par un joint réalisé par scellage à froid, scellage à chaud ou collage.

6. Conteneur selon l'une quelconque des revendications 4 - 5, dans lequel ledit joint est étanche au gaz.

7. Procédé pour le remplissage d'un conteneur (10) possédant un compartiment fermé (5) défini par des parois souples, lesdites parois comprenant deux parois latérales opposées (12a, 12b) et une paroi inférieure (13) pliée en une forme de double paroi, comprenant les étapes suivantes
(a) jonction réciproque de sections butant l'une contre l'autre (8a, 8b) d'une partie de bord extérieur (6) de ladite paroi inférieure (13) pour former une poche de fond fermée (9),
(b) stérilisation du compartiment (5),
(c) stérilisation de ladite poche de fond (9),
(d) stérilisation externe du conteneur (10),
(e) ouverture d'un conduit de remplissage (11) du conteneur (10) pour établir une communication entre le compartiment (5) du conteneur (10) et les environs,
(f) remplissage du conteneur (10) par le biais dudit conduit de remplissage (11), et
(g) scellage du conduit de remplissage (11) du conteneur (10) rempli.

8. Procédé selon la revendication 14, dans lequel les sections butant l'une contre l'autre (8a, 8b) sont reliées entre elles par un joint destiné à être rompu lors du remplissage du conteneur (10).

9. Procédé selon la revendication 14 ou 15, dans lequel les étapes (a) - (c) sont exécutées séparément des étapes (d) - (g).

10. Procédé selon l'une quelconque des revendications 14 - 16, dans lequel les étapes (d) - (g) sont exécutées dans un environnement stérile.
